# EUROPÄISCHE PATENTANMELDUNG

(11) **EP 3 680 461 A1**
(43) Veröffentlichungstag der Anmeldung: **15.07.2020**
(21) Anmeldenummer: 20151477.5
(22) Anmeldetag: 13.01.2020
(51) Int. Cl.: F01N 3/025, F01N 3/029, F01N 3/035, F01N 3/10, F01N 3/20, F01N 3/22, F01N 3/30, F01N 3/32, F01N 9/00, F01N 13/00

(54) **REGENERATIONSLUFTSYSTEM FÜR EIN ABGASNACHBEHANDLUNGSSYSTEM EINES VERBRENNUNGSMOTORS SOWIE VERFAHREN ZUR ABGASNACHBEHANDLUNG**

(30) Priorität: 14.01.2019 DE 102019100752
(71) Anmelder: VOLKSWAGEN AG, 38440 Wolfsburg (DE)
(72) Erfinder: Williges, Martin, 38518 Gifhorn (DE); Stratmann, Lars, 38465 Brome (DE); Fink, Rene, 23970 Wismar (DE)
(74) Vertreter: Gulde & Partner

(57) **Zusammenfassung**

Die Erfindung betrifft ein Regenerationsluftsystem (50) für ein Abgasnachbehandlungssystem eines Verbrennungsmotors (10), sowie ein solches Abgasnachbehandlungssystem. Das Regenerationsluftsystem (50) umfasst ein Regenerationsluftförderelement (52), einen Regenerationsluftkanal (54) und ein Regenerationsluftventil (56). Dabei ist in dem Regenerationsluftkanal (54) eine Sensorik (58, 60, 62, 64, 66) vorgesehen, mit welcher ein Regenerationsluftmassenstrom *ṁ*_{SL} exakt bestimmt werden kann. Das Abgasnachbehandlungssystem umfasst eine Abgasanlage (20) mit einem Abgaskanal (22), in welchem in Strömungsrichtung eines Abgases durch den Abgaskanal (22) ein motornaher Drei-Wege-Katalysator (28) und stromabwärts ein Vier-Wege-Katalysator (30, 32) angeordnet sind. Es ist vorgesehen, dass am Abgaskanal stromabwärts des motornahen Drei-Wege-Katalysators (28) und stromaufwärts des Vier-Wege-Katalysators (30, 32) eine Einleitstelle (48) für die Regenerationsluft aus dem Regenerationsluftsystem (50) ausgebildet ist.

Die Erfindung betrifft ferner ein Verfahren zur Abgasnachbehandlung eines Verbrennungsmotors (10) mit einem solchen Abgasnachbehandlungssystem.

## Beschreibung

Die Erfindung betrifft ein Regenerationsluftsystem zur Abgasnachbehandlung eines Verbrennungsmotors, ein Abgasnachbehandlungssystem mit einem solchen Regenerationsluftsystem sowie ein Verfahren zur Abgasnachbehandlung eines Verbrennungsmotors gemäß dem Oberbegriff der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Im Fahrbetrieb wird ein solcher Ottopartikelfilter mit Ruß beladen. Damit der Abgasgegendruck nicht zu stark ansteigt, muss dieser Ottopartikelfilter kontinuierlich oder periodisch regeneriert werden. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Ferner wird angestrebt, die Katalysatoren im Abgaskanal des Verbrennungsmotors nach einem Kaltstart möglichst schnell auf eine Betriebstemperatur zu bringen, um möglichst schnell eine hohe Konvertierungsrate für schädliche Abgaskomponenten zu erreichen.

Bei einer Anordnung des Partikelfilters in einer motorfernen Unterbodenposition eines Kraftfahrzeuges ist es bei schwacher Motorlast nur schwer möglich, den Partikelfilter auf eine Temperatur zu erwärmen, bei der eine Regeneration des Partikelfilters durch einen Abbrand des im Partikelfilters zurückgehaltenen Rußes möglich ist. Um eine Regeneration insbesondere auch in Schwachlastphasen zu ermöglichen, wird ein Partikelfilter genutzt, welcher eine drei-Wege-katalytische Beschichtung aufweist. Dabei werden durch ein unterstöchiometrisches Verbrennungsluftverhältnis des Verbrennungsmotors und ein gleichzeitiges Einblasen von Regenerationsluft die unverbrannten Abgaskomponenten auf der katalytisch wirksamen Beschichtung des Partikelfilters exotherm umgesetzt, sodass sich der Partikelfilter erwärmt.

Aus der DE 102 57 153 A1 ist eine Vorrichtung zur Bestimmung der Sekundärluftmenge bekannt, bei welcher an zwei unterschiedlichen Querschnitten in der Sekundärluftleitung ein Druck ermittelt wird und aus dem ermittelten Druck ein Rückschluss auf die Sekundärluftmenge getroffen wird.

Aus der DE10 2010 037 454 A1 ist ein Abgasnachbehandlungssystem für einen Verbrennungsmotor bekannt, bei welchem eine Abgasnachbehandlungskomponente mittels eines Abgasbrenners auf eine Betriebstemperatur aufgeheizt werden kann. Der Abgasbrenner wird durch ein Luftversorgungssystem mit einer Sekundärluftpumpe versorgt, wobei die dem Abgasbrenner zugeführte Luftmenge mittels eines Massenstromsensors ermittelt wird, um das Verbrennungsluftverhältnis des Abgasbrenners einzuregeln.

Der Erfindung liegt nun die Aufgabe zugrunde, die Regelung der Regenerationsluftmenge zu verbessern und somit die Regeneration eines Partikelfilters in Unterbodenposition eines Kraftfahrzeuges auch bei niedrigen Motorlasten zu ermöglichen.

Erfindungsgemäß wird diese Aufgabe durch ein Regenerationsluftsystem für ein Abgasnachbehandlungssystem eines Verbrennungsmotors gelöst, wobei das Regenerationsluftsystem einen Regenerationsluftförderelement, einen Regenerationsluftkanal und ein Regenerationsluftventil umfasst, wobei in dem Regenerationsluftkanal eine Sensorik zur Ermittlung eines Regenerationsluftmassenstroms *ṁ*_{SL} angeordnet ist. Als Regenerationsluftförderelement sind ein Regenerationsluftgebläse oder ein Regenerationsluftverdichter, insbesondere eine Regenerationsluftpumpe vorgesehen. Durch eine Sensorik kann die dem Regenerationsluftförderelement zugeführte Luftmenge bestimmt und somit der Regenerationsluftmassenstrom *ṁ*_{SL} exakt ermittelt werden. Somit ist eine verbesserte Abgasnachbehandlung des Verbrennungsmotors möglich. Zusätzlich kann das Regenerationsluftförderelement über einen zweiten Kanal mit dem Auslass des Verbrennungsmotors verbunden sein, wobei über den zweiten Kanal Sekundärluft in den Abgaskanal eingebracht werden kann, um einen motornahen Drei-Wege-Katalysator möglichst schnell auf seine Betriebstemperatur aufzuheizen.

Durch die in den abhängigen Ansprüchen aufgeführten Merkmale sind vorteilhafte Weiterbildungen und Verbesserungen des im unabhängigen Patentanspruch angegebenen Regenerationsluftsystems möglich.

In bevorzugter Ausgestaltung der Erfindung ist vorgesehen, dass die Sensorik zur Ermittlung des Regenerationsluftmassenstroms *ṁ*_{SL} einen Luftmassenmesser umfasst. Bei einem Luftmassenmesser ändert sich in Abhängigkeit des Massenstroms das Ausgangssignal des Sensors, sodass auf die dem Regenerationsluftförderelement zugeführte Luftmasse geschlossen werden kann. Somit ist eine Feineinstellung des Regenerationsluftmassenstroms *ṁ*_{SL} möglich.

Besonders bevorzugt ist dabei, wenn der Luftmassenmesser als Heißfilmluftmassenmesser ausgeführt ist. Durch einen Heißfilmluftmassenmesser ist eine besonders exakte Bestimmung des dem Regenerationsluftförderelement zugeführten Luftmassenstroms möglich.

In weiterer bevorzugter Ausgestaltung der Erfindung ist vorgesehen, dass die Sensorik mindestens einen Drucksensor umfasst. Durch das Einströmen von Frischluft ändert sich der dynamische Druck in der Regenerationsluftleitung. Somit ist es möglich, über die Druckänderung auf einen Luftmassenstrom zu schließen, welcher dem Regenerationsluftförderelement zugeführt wird.

Besonders bevorzugt ist dabei, wenn die Sensorik einen Differenzdrucksensor zur Ermittlung einer Druckdifferenz über das Regenerationsluftförderelement umfasst. Durch einen Differenzdrucksensor, welcher eine Druckdifferenz über das Regenerationsluftförderelement ermittelt, ist eine besonders exakte Steuerung des Regenerationsluftmassenstroms *ṁ*_{SL} möglich. Dabei kann der Regenerationsluftmassenstrom *ṁ*_{SL} anhand der Druckdifferenz und der Drehzahl des Regenerationsluftförderelements bestimmt und entsprechend geregelt werden.

In einer bevorzugten Ausführungsform des Regenerationsluftsystems ist vorgesehen, dass das Regenerationsluftsystem einen Regler umfasst, welcher mittels der Sensorik die Fördermenge des Regenerationsluftförderelement regelt. Durch einen Regler, welcher die Drehzahl des Regenerationsluftförderelements regelt, kann der Regenerationsluftmassenstrom *ṁ*_{SL} exakt an die Anforderungen im Abgasnachbehandlungssystem angepasst werden.

Erfindungsgemäß wird ein Abgasnachbehandlungssystem für einen Verbrennungsmotor mit einer Abgasanlage, welche mit einem Auslass eines Verbrennungsmotors verbindbar ist, vorgeschlagen, wobei die Abgasanlage einen Abgaskanal aufweist, in welchem in Strömungsrichtung eines Abgases des Verbrennungsmotors durch den Abgaskanal ein motornaher Drei-Wege-Katalysator und stromabwärts des motornahen Drei-Wege-Katalysators ein Partikelfilter mit einer katalytisch wirksamen Beschichtung angeordnet sind. Das Abgasnachbehandlungssystem weist ein erfindungsgemäßes Regenerationsluftsystem auf, wobei an dem Abgaskanal stromabwärts des motornahen Drei-Wege-Katalysators und stromaufwärts des Partikelfilters eine Einleitstelle für die Regenerationsluft des Regenerationsluftsystems ausgebildet ist. Ein solcher Partikelfilter mit einer drei-Wege-katalytisch wirksamen Beschichtung wird auch als Vier-Wege-Katalysator bezeichnet. Unter einer motornahen Anordnung des Drei-Wege-Katalysators ist in diesem Zusammenhang eine Anordnung im Abgaskanal zu verstehen, bei welcher der Einlass des Drei-Wege-Katalysators eine Abgaslauflänge von weniger als 80 cm, vorzugsweise von weniger als 50 cm, ab dem Auslass des Verbrennungsmotors aufweist. Durch ein solches System können die Schadstoffemissionen des Verbrennungsmotors gegenüber einem Regenerationsluftsystem, bei welchem die Regenerationsluftmenge lediglich gesteuert wird, reduziert werden. Dabei kann im Abgaskanal stromaufwärts des Partikelfilter sowohl ein stöchiometrisches Verbrennungsluftverhältnis eingestellt werden, um den Partikelfilter auf seine Regenerationstemperatur aufzuheizen, als auch ein definiertes überstöchiometrisches Verbrennungsluftverhältnis, um bei einer Regeneration den Sauerstoffüberschuss zur Oxidation des im Partikelfilter zurückgehaltenen Rußes exakt einzustellen. Dadurch kann die Gefahr einer thermischen Schädigung des Partikelfilters bei der Regeneration des Partikelfilters begegnet werden. Ferner kann durch eine Anpassung des Regenerationsluftmassenstroms verhindert werden, dass der Partikelfilter aufgrund einer zu geringen Rußoxidation unter seine Regenerationstemperatur auskühlt. Somit kann eine bestmögliche Abbrandgeschwindigkeit für eine schnelle und emissionsarme Regeneration des Partikelfilters erreicht werden.

In einer bevorzugten Ausführungsform des Abgasnachbehandlungssystems ist vorgesehen, dass im Abgaskanal stromabwärts eines Auslasses des Verbrennungsmotors und stromaufwärts des motornahen Drei-Wege-Katalysators eine Turbine eines Abgasturboladers angeordnet ist. Durch eine Turbine eines Abgasturboladers wird dem Abgasstrom des Verbrennungsmotors zusätzlich Energie entzogen. Daher ist es bei einem Verbrennungsmotor mit Abgasturbolader besonders schwierig, einen Partikelfilter in Unterbodenlage auf seine Regenerationstemperatur aufzuheizen. Somit ist die Verwendung eines solchen Abgasnachbehandlungssystems bei einem Turbo-Motor besonders vorteilhaft.

In einer vorteilhaften Ausführungsform der Erfindung ist vorgesehen, dass im Abgaskanal stromaufwärts des motornahen Drei-Wege-Katalysators, insbesondere stromabwärts der Turbine des Abgasturboladers und stromaufwärts des motornahen Drei-Wege-Katalysators, eine erste Lambdasonde, insbesondere eine Breitbandsonde, angeordnet ist. Durch eine Breitbandsonde stromaufwärts des motornahen Drei-Wege-Katalysators ist eine exakte Bestimmung des Verbrennungsluftverhältnisses des Verbrennungsmotors möglich. Dadurch kann eine exakte Regelung der Einspritzmenge erfolgen, um ein gewünschtes Verbrennungsluftverhältnis in den Brennräumen des Verbrennungsmotors einzustellen. Der durch den Verbrennungsmotor in die Abgasanlage eingebrachte Abgasmassenstrom kann durch das Motorsteuergerät exakt ermittelt werden. Mit diesen beiden Variablen kann für ein gewünschtes Verbrennungsluftverhältnis stromaufwärts des Partikelfilters die notwendige Regenerationsluftmenge berechnet werden und als Regelgröße an den Regler des Regenerationsluftförderelements weitergegeben werden.

In einer weiteren Verbesserung des Abgasnachbehandlungssystems ist vorgesehen, dass im Abgaskanal stromabwärts der Einleitstelle für die Regenerationsluft und stromaufwärts des Partikelfilters mit der katalytisch wirksamen Beschichtung eine zweite Lambdasonde angeordnet ist. Die zweite Lambdasonde kann zur Regelung des Verbrennungsluftverhältnisses genutzt werden, wenn das Regenerationsluftsystem deaktiviert ist, um die Regelgüte der Lambdaregelung zu verbessern und eine besonders effiziente Konvertierung der Schadstoffe durch den motornahen Drei-Wege-Katalysator zu erreichen.

In einer weiteren Verbesserung des Abgasnachbehandlungssystems ist vorgesehen, dass in der Abgasanlage ein Differenzdrucksensor vorgesehen ist, mit welchem eine Druckdifferenz über den Partikelfilter mit der katalytisch wirksamen Beschichtung messbar ist. Durch einen Differenzdrucksensor kann die Rußbeladung des Partikelfilters abgeschätzt werden und bei Überschreiten eines festgelegten Schwellenwertes eine Regeneration des Partikelfilters eingeleitet werden.

Erfindungsgemäß wird ein Verfahren zur Abgasnachbehandlung eines Verbrennungsmotors mit einer Abgasanlage, welche mit einem Auslass eines Verbrennungsmotors verbunden ist, vorgeschlagen, wobei die Abgasanlage einen Abgaskanal aufweist, in welchem in Strömungsrichtung eines Abgases des Verbrennungsmotors durch den Abgaskanal ein motornaher Drei-Wege-Katalysator und stromabwärts des motornahen Drei-Wege-Katalysators ein Partikelfilter mit einer katalytisch wirksamen Beschichtung angeordnet sind. Das Abgasnachbehandlungssystem weist ferner ein erfindungsgemäßes Regenerationsluftsystem auf, wobei an dem Abgaskanal stromabwärts des motornahen Drei-Wege-Katalysators und stromaufwärts des Partikelfilters eine Einleitstelle für die Regenerationsluft des Regenerationsluftsystems ausgebildet ist. Das Verfahren umfassend folgende Schritte:
- Ermitteln einer Abgastemperatur oder einer Bauteiltemperatur des Partikelfilters mit der katalytisch wirksamen Beschichtung,
- Aufheizen des Partikelfilters, wenn die ermittelte Abgastemperatur oder die Bauteiltemperatur des Partikelfilters unterhalb einer zur Regeneration des Partikelfilters notwendigen Regenerationstemperatur liegt, wobei
- der Verbrennungsmotor mit einem unterstöchiometrischen Verbrennungsluftverhältnis betrieben wird, und wobei
- durch das Regenerationsluftsystem Frischluft in den Abgaskanal eingeblasen wird, mit welcher die unverbrannten Abgaskomponenten auf der katalytisch wirksamen Beschichtung des Partikelfilters exotherm umgesetzt werden, wobei
- die Zumessung und Regelung des Regenerationsluftmassenstroms derart erfolgt, dass sich stromabwärts einer Einleitstelle für die Regenerationsluft ein stöchiometrisches oder überstöchiometrisches Abgas einstellt.

Durch ein erfindungsgemäßes Verfahren ist eine verbesserte Regelung des Verbrennungsluftverhältnisses in der Abgasanlage des Verbrennungsmotors möglich. Dabei können die Emissionen insbesondere bei einer Regeneration des Partikelfilters durch die verbesserte Regelung der Regenerationsluftmenge verringert werden. Ferner ist es möglich, den Kraftstoffverbrauch des Verbrennungsmotors zu senken, da die Heizphase und die Regenerationsphase des Partikelfilters durch die exaktere Regelung der Regenerationsluftmenge verkürzt werden können und der Verbrennungsmotor somit länger in seinem verbrauchsoptimalen Betriebspunkt betrieben werden kann.

In einer bevorzugten Ausführungsvariante des Verfahrens ist vorgesehen, dass ein Istmassenstrom ermittelt wird und mit einem Sollmassenstrom verglichen wird, wobei das Regenerationsluftförderelement bei einer Abweichung des Istmassenstroms vom Sollmassenstrom entsprechend durch einen Regler geregelt wird. Der Vergleich des Istmassenstroms mit dem Sollmassenstrom führt zu der Möglichkeit, den Regenerationsmassenstrom auf einfache Art und Weise exakt einzuregeln.

In einer vorteilhaften Ausführungsform des Verfahrens ist vorgesehen, dass die Abgastemperatur des Verbrennungsmotors ermittelt und mit einer Schwellentemperatur verglichen wird, wobei innermotorische Heizmaßnahmen eingeleitet werden, wenn die Abgastemperatur unterhalb der Schwellentemperatur liegt. Liegt die Abgastemperatur unter einer Light-Off-Temperatur der katalytisch wirksamen Beschichtung des Verbrennungsmotors, so wird die Abgastemperatur zunächst durch innermotorische Maßnahmen wie einer Verstellung des Zündzeitpunktes in Richtung "spät" oder einen Lambda-Split-Betrieb zwischen den unterschiedlichen Brennräumen angehoben. Dabei muss auf diesem Wege nicht die Regenerationstemperatur des Partikelfilters von etwa 600°C erreicht werden, sondern es reicht aus, den Partikelfilter auf die Light-Off-Temperatur der katalytisch wirksamen Beschichtung von etwa 300°C aufzuheizen. Somit kann die innermotorische Heizphase deutlich verkürzt werden. Hat die katalytisch wirksamen Beschichtung des Partikelfilters ihre Light-Off-Temperatur erreicht, so erfolgt ein weiteres Aufheizen des Partikelfilters durch einen unterstöchiometrischen Betrieb des Verbrennungsmotors und gleichzeitiges Einblasen von Regenerationsluft, wobei die unverbrannten Abgaskomponenten, insbesondere unverbrannte Kohlenwasserstoffe (HC), Kohlenstoffmonoxid (CO) und Wasserstoff (H2) auf der katalytisch wirksamen Beschichtung des Partikelfilters exotherm umgesetzt werden, bis der Partikelfilter seine Regenerationstemperatur erreicht hat.

In einer bevorzugten Ausführungsform des Verfahrens ist vorgesehen, dass das Regenerationsluftsystem einen Luftmassenmesser aufweist, wobei aus einer Änderung des Ausgangssignals des Luftmassenmessers auf den Regenerationsluftmassenstrom geschlossen wird. Dabei ist durch einen Heißfilmluftmassenmesser eine besonders exakte Bestimmung des Regenerationsluftmassenstroms möglich.

Alternativ ist mit Vorteil vorgesehen, dass eine Druckdifferenz Δp über das Regenerationsluftförderelement ermittelt wird, wobei der Regenerationsluftmassenstrom aus der Druckdifferenz Δp und der Drehzahl des Regenerationsluftförderelements berechnet wird. Auch über einen Differenzdrucksensor ist eine einfache Regelung des Regenerationsluftmassenstroms möglich.

In einer bevorzugten Ausführungsvariante des Verfahrens ist vorgesehen, dass ein Verbrennungsluftverhältnis an der ersten Lambdasonde ermittelt wird, und der Regenerationsluftmassenstrom derart geregelt wird, dass sich stromabwärts der Einleitstelle ein stöchiometrisches Abgas ergibt. Dadurch kann während der Heizphase des Partikelfilters eine effiziente Konvertierung der Schadstoffe durch die katalytisch wirksame Beschichtung des Partikelfilters sichergestellt werden.

In einer weiteren Verbesserung des Verfahrens ist vorgesehen, dass stromaufwärts und/oder stromabwärts des Partikelfilters eine Abgastemperatur ermittelt wird, wobei der Regenerationsluftmassenstrom derart geregelt wird, dass eine thermische Schädigung des Partikelfilters vermieden wird und/oder ein Absinken der Temperatur des Partikelfilters unter seine Regenrationstemperatur vermieden wird. Dadurch kann eine Abbrandgeschwindigkeit für die im Partikelfilter zurückgehaltenen Rußpartikel eingestellt werden, mit welcher eine möglichst schnelle Regeneration des Partikelfilters erreicht wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den Zeichnungen mit den gleichen Bezugsziffern gekennzeichnet. Es zeigen:
- Figur 1: ein erstes Ausführungsbeispiel für einen Verbrennungsmotor mit einem erfindungsgemäßen Abgasnachbehandlungssystem;
- Figur 2: ein weiteres Ausführungsbeispiel für einen Verbrennungsmotor mit einem erfindungsgemäßen Abgasnachbehandlungssystem;
- Figur 3: einen Betriebszustand des Verbrennungsmotors, bei dem der Partikelfilter durch innermotorische Maßnahmen auf seine Light-Off-Temperatur aufgeheizt wird;
- Figur 4: einen zweiten Betriebszustand des Verbrennungsmotors, bei dem Regenerationsluft eingeblasen wird, um den Partikelfilter durch eine exotherme Umsetzung der unverbrannten Abgaskomponenten mit der Regenerationsluft weiter aufzuheizen; und
- Figur 5: einen dritten Betriebszustand des Verbrennungsmotors, bei dem der Partikelfilter nach Erreichen seiner Regenerationstemperatur regeneriert wird, wobei das Regenerationsluftsystem den zur Oxidation des im Partikelfilter zurückgehaltenen Rußes notwendigen Sauerstoff liefert.

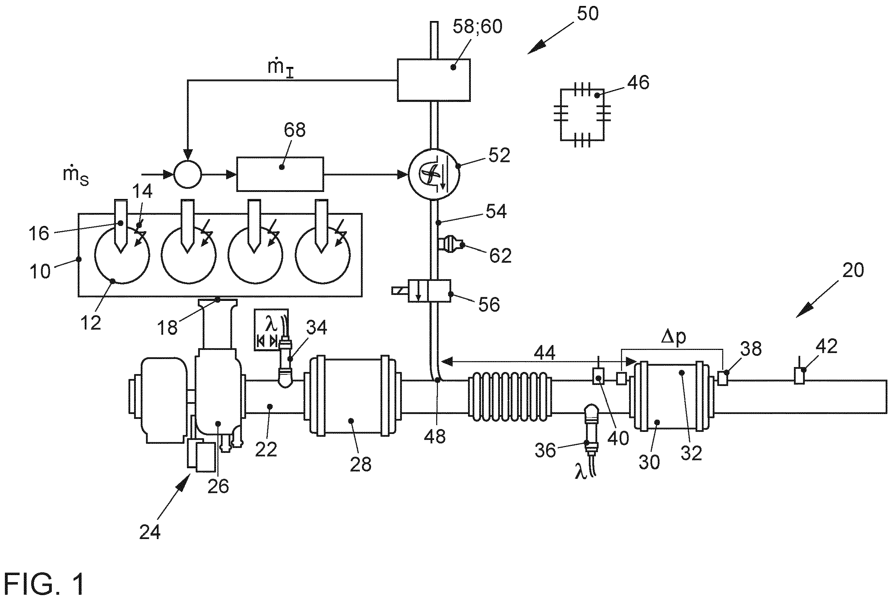

Figur 1 zeigt die schematische Darstellung eines Verbrennungsmotors 10, welcher mit seinem Auslass 18 mit einer Abgasanlage 20 verbunden ist. Der Verbrennungsmotor 10 ist in diesem Ausführungsbeispiel ein direkteinspritzender Ottomotor und weist mehrere Brennräume 12 auf. An den Brennräumen 12 sind jeweils eine Zündkerze 14 und ein Kraftstoffinjektor 16 zur Einspritzung eines Kraftstoffes in den jeweiligen Brennraum 12 angeordnet. An den Brennräumen 12 sind Einlassventile und Auslassventile angeordnet, mit welchen eine fluidische Verbindung vom Ansaugtrakt zu den Brennräumen 12 oder von den Brennräumen 12 zur Abgasanlage 20 geöffnet oder verschlossen werden kann. Die Abgasanlage 20 umfasst einen Abgaskanal 22, in welchem in Strömungsrichtung eines Abgases des Verbrennungsmotors 10 durch den Abgaskanal 22 eine Turbine 26 eines Abgasturboladers 24 und stromabwärts der Turbine 26 ein motornaher Drei-Wege-Katalysator 28 angeordnet sind. Stromabwärts des motornahen Drei-Wege-Katalysators 28 ist in einer Unterbodenposition eines Kraftfahrzeuges ein Partikelfilter 30 mit einer drei-Wege-katalytisch wirksamen Beschichtung 32 angeordnet, welcher auch als Vier-Wege-Katalysator bezeichnet wird. Das Abgasnachbehandlungssystem umfasst ferner ein Regenerationsluftsystem 50, mit welchem stromabwärts des motornahen Drei-Wege-Katalysators 28 und stromaufwärts des Partikelfilters 30 an einer Einleitstelle 48 Regenerationsluft in den Abgaskanal 22 eingeblasen werden kann.

Das Regenerationsluftsystem 50 umfasst einen Regenerationsluftförderelement 52 und einen Regenerationsluftkanal 54, welcher das Regenerationsluftförderelement 52 mit der Einleitstelle 48 am Abgaskanal 22 verbindet. In dem Regenerationsluftkanal 54 ist ein Regenerationsluftventil 56 angeordnet, mit welchem die Regenerationsluftzufuhr zum Abgaskanal 22 freigegeben oder gesperrt werden kann. Das Regenerationsluftventil 56 verhindert ferner ein Ausströmen von Abgas aus dem Abgaskanal in Richtung des Regenerationsluftsystems 50. In dem Regenerationsluftkanal 54 ist stromaufwärts des Regenerationsluftförderelements 52 ein Luftmassenmesser 58, insbesondere ein Heißfilmluftmassenmesser 60 angeordnet. Ferner ist an dem Regenerationsluftsystem 50 ein Regler 68 vorgesehen, mit welchem die Drehzahl des Regenerationsluftförderelements 52 regelbar ist.

Stromabwärts der Turbine 26 des Abgasturboladers 24 und stromaufwärts des motornahen Drei-Wege-Katalysators 28 ist am Abgaskanal 22 eine erste Lambdasonde 34 angeordnet, welche als Breitbandsonde ausgebildet ist. Stromabwärts der Einleitstelle 48 und stromaufwärts des Partikelfilters 30 ist eine zweite Lambdasonde 36 angeordnet, welche vorzugsweise als Sprungsonde ausgeführt ist. Ferner ist im Abgaskanal 22 ein Differenzdrucksensor 38 vorgesehen, mit welcher eine Druckdifferenz über den Partikelfilter 30 ermittelt werden kann. Ferner sind stromaufwärts und stromabwärts des Partikelfilters 30 jeweils ein Temperatursensor 40, 42 vorgesehen, um die Abgastemperaturen stromaufwärts und stromabwärts des Partikelfilters 30 zu erfassen. Zwischen der Einleitstelle 48 und einem Einlass des Partikelfilters 30 ist eine Mischstrecke 44 ausgebildet, in welcher sich das Abgas des Verbrennungsmotors 10 mit der Frischluft aus dem Regenerationsluftsystems 50 vermischt.

Eine Regelung des Regenerationsluftmassenstroms *ṁ*_{SL} durch die zweite Lambdasonde 36 ist nicht mit hinreichender Genauigkeit möglich, da sich bei einem unterstöchiometrischen Verbrennungsluftverhältnis am motornahem Drei-Wege-Katalysator 28 Wasserstoff in unbekannter Menge bildet und das Sondensignal der zweiten Lambdasonde 36 verfälscht.

Der Verbrennungsmotor 10 ist mit einem Motorsteuergerät 46 verbunden, mit welchem unter anderem die Einspritzmenge des Kraftstoffes, der Zündzeitpunkt und die Regenerationsluftmenge geregelt werden.

Die Erfindung sieht daher vor, für die genaue Luftzumessung den Heißfilmluftmassenmesser 60 in dem Regenerationsluftkanal 54 zu nutzen. Über die Gemischadaption kann das Verbrennungsluftverhältnis in den Brennräumen 12 des Verbrennungsmotors 10 sehr genau eingestellt werden. Der dem Verbrennungsmotor 10 zugeführte Luftmassenstrom und der daraus resultierende Abgasmassenstrom können ebenfalls exakt durch das Motorsteuergerät 46 ermittelt werden. Mit diesen beiden Variablen kann der notwendige Regenerationsluftmassenstrom *ṁ*_{SL} zur Erreichung des Soll-Verbrennungsluftverhältnisses stromaufwärts des Partikelfilters 30 berechnet und als Regelgröße an den Regler 68 des Regenerationsluftförderelements 52 weitergegeben werden.

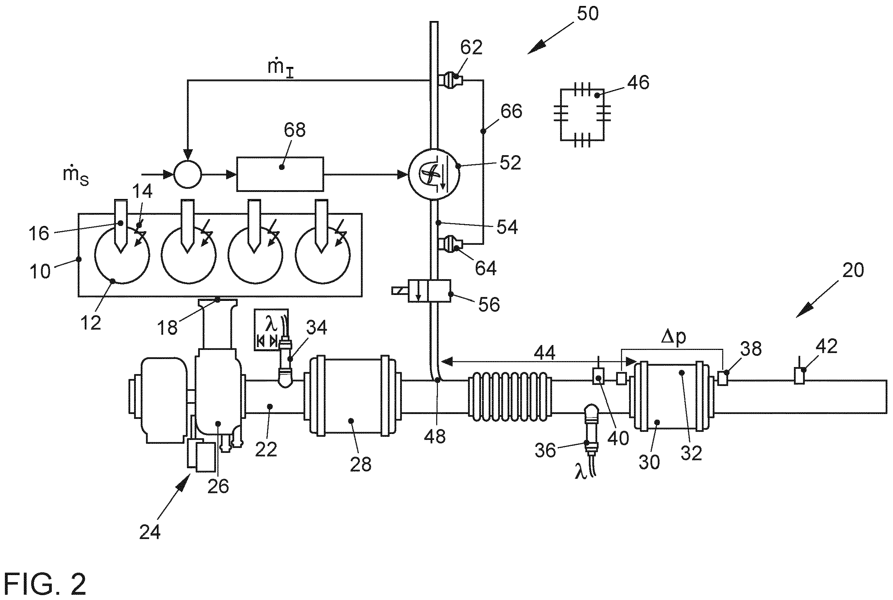

In Figur 2 ist ein weiteres Ausführungsbeispiel eines erfindungsgemäßen Abgasnachbehandlungssystems für einen Verbrennungsmotor 10 dargestellt. Bei im Wesentlichen gleichem Aufbau wie zu Figur 1 ausgeführt, erfolgt hier die Bestimmung der Regenerationsluftmenge im Regenerationsluftsystem 50 nicht durch einen Heißfilmluftmassenmesser 60, sondern durch Drucksensoren 62, 64, welche als Differenzdrucksensor 66 eine Druckdifferenz Δp über den Regenerationsluftförderelements 52 ermitteln. Durch diese Druckdifferenz Δp und die Drehzahl n_{SL} des Regenerationsluftförderelements 52 kann auf alternative Art der Regenerationsluftmassenstrom *ṁ*_{SL} ermittelt werden.

Im Betrieb des Verbrennungsmotors 10 wird der Partikelfilter 30 mit Rußpartikeln aus dem Abgas des Verbrennungsmotors 10 beladen. Da eine Regeneration des Partikelfilters 30 eine Temperatur von mehr als 600°C erfordert, kann eine solche Temperatur im Schwachlastbetrieb nicht oder nur äußerst schwierig durch innermotorische Heizmaßnahmen erreicht werden. Daher ist der Partikelfilter 30 mit einer katalytisch wirksamen Beschichtung 32 versehen, welche eine exotherme Umsetzung von unverbrannten Abgaskomponenten, insbesondere von unverbrannten Kohlenwasserstoffen, Kohlenmonoxid und Wasserstoff, unter Erwärmung des Partikelfilters 30 ermöglicht. Dazu wird der Verbrennungsmotor 10 mit einem unterstöchiometrischen Verbrennungsluftverhältnis λ < 1 betrieben und gleichzeitig Regenerationsluft in den Abgaskanal 22 eingeblasen. Ein solches Aufheizen des Partikelfilters 30 wird auch als chemisches Heizen bezeichnet. Infolge dieser Möglichkeit muss der Partikelfilter 30 zur Regeneration nur noch auf die Light-Off-Temperatur der katalytisch wirksamen Beschichtung 32 aufgeheizt werden. Nach Erreichen der Regenerationstemperatur kann unter Beibehaltung des chemischen Heizens über das Regenerationsluftsystem 50 die Regenerationsluftmenge erhöht werden, sodass sich stromabwärts der Einleitstelle 48 ein überstöchiometrisches Abgas einstellt. Mit dem Sauerstoffüberschuss im Abgas kann der im Partikelfilter 30 zurückgehaltene Ruß oxidiert und der Partikelfilter 30 somit regeneriert werden. Für eine schnelle und emissionsarme Regeneration des Partikelfilters ist es notwendig, den Regenerationsluftmassenstrom *ṁ*_{SL} möglichst genau zu kennen.

Während der Aufheizphase bildet sich durch den unterstöchiometrischen Betrieb des Verbrennungsmotors 10 am motornahen Drei-Wege-Katalysator Ammoniak, der im Partikelfilter 30 bei zu hohem Luftüberschuss zu Stickoxid umgesetzt würde. Eine zu niedrige Luftzufuhr würde zur Emission von Kohlenwasserstoffen, Kohlenmonoxid und Ammoniak führen.

Während der Regenerationsphase des Partikelfilters kann ein zu hoher Regenerationsluftmassenstrom *ṁ*_{SL} die Temperatur im Partikelfilter 30 ungewollt senken, wodurch die Regeneration abgebrochen wird, oder bei einer hohen Rußbeladung des Partikelfilters über eine zu hohe Exothermie zu einer thermischen Schädigung des Partikelfilters 30 führen. Bei einem zu niedrigen Regenerationsluftmassenstrom *ṁ*_{SL} würde die Regeneration zu langsam ablaufen und somit nicht innerhalb eines vertretbaren Zeitintervalls abgeschlossen sein.

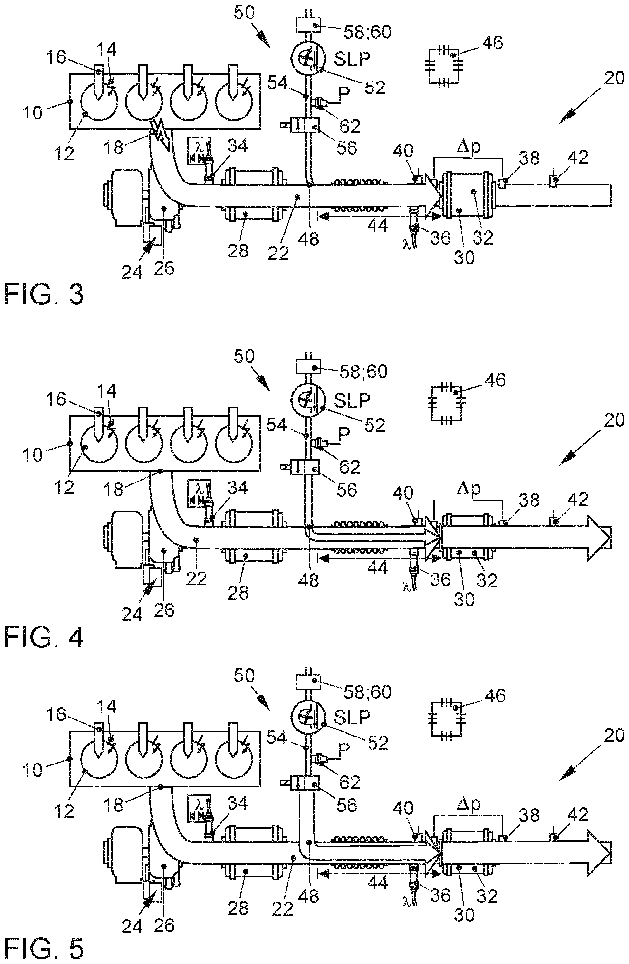

In Figur 3 ist ein erster Betriebszustand des Verbrennungsmotors 10 dargestellt, bei dem ein Aufheizen des Partikelfilters 30 ausschließlich durch innermotorische Maßnahmen wie beispielsweise einer Verstellung des Zündwinkels in Richtung "spät" erfolgt. Dabei wird der Verbrennungsmotor 10 mit einem stöchiometrischen Verbrennungsluftverhältnis betrieben, um eine effiziente Konvertierung der Schadstoffe im Abgas des Verbrennungsmotors 10 durch den motornahen Drei-Wege-Katalysator 10 zu ermöglichen. Das Regenerationsluftsystem 50 ist dabei deaktiviert und das Regenerationsluftventil 56 geschlossen. Dieser Betriebszustand wird beibehalten, solange die katalytisch wirksame Beschichtung 32 des Partikelfilters 30 noch nicht ihre Light-Off-Temperatur erreicht hat.

Hat die drei-Wege-katalytisch wirksame Beschichtung 32 des Partikelfilters 30 ihre Light-Off-Temperatur von etwa 300°C erreicht, ab der eine effiziente Konvertierung der Schadstoffe im Abgas des Verbrennungsmotors unter Freisetzung von Wärme möglich ist, wird der Verbrennungsmotor 10 in dem in Figur 4 dargestellten Betriebszustand betrieben. Dabei wird der Verbrennungsmotor 10 mit einem unterstöchiometrischen Verbrennungsluftverhältnis betrieben und gleichzeitig Regenerationsluft an der Einleitstelle 48 in den Abgaskanal 22 eingeblasen, sodass sich am Einlass des Partikelfilters 30 ein stöchiometrischen Abgas einstellt. Die unverbrannten Abgaskomponenten werden mit der Regenerationsluft exotherm auf der katalytisch wirksamen Oberfläche 32 des Partikelfilters 32 umgesetzt, bis dieser seine Regenerationstemperatur von etwa 600°C erreicht hat.

Anschließend wird, wie in Figur 5 dargestellt, die Regenerationsluftmenge erhöht, sodass sich stromabwärts der Einleitstelle 48 ein überstöchiometrisches Abgas einstellt. Mit dem Restsauerstoff im Abgas werden die im Partikelfilter 30 zurückgehaltenen Rußpartikel oxidiert, wodurch eine Regeneration des Partikelfilters 30 erfolgt. Dabei wird der Verbrennungsmotor 10 vorzugsweise weiterhin mit einem unterstöchiometrischen Verbrennungsluftverhältnis betrieben, um das chemische Heizen des Partikelfilters 30 während der Regeneration aufrechtzuerhalten und ein Auskühlen des Partikelfilters 30 unter seine Regenerationstemperatur zu vermeiden.

### Bezugszeichenliste

- 10: Verbrennungsmotor
- 12: Brennraum
- 14: Zündkerze
- 16: Kraftstoffinjektor
- 18: Auslass

- 20: Abgasanlage
- 22: Abgaskanal
- 24: Abgasturbolader
- 26: Turbine
- 28: Drei-Wege-Katalysator

- 30: Partikelfilter
- 32: katalytisch wirksame Beschichtung
- 34: erste Lambdasonde / Breitbandsonde
- 36: zweite Lambdasonde / Sprungsonde
- 38: Differenzdrucksensor

- 40: erster Temperatursensor
- 42: zweiter Temperatursensor
- 44: Mischstrecke
- 46: Motorsteuergerät
- 48: Einleitstelle

- 50: Regenerationsluftsystem
- 52: Regenerationsluftförderelement
- 54: Regenerationsluftkanal
- 56: Regenerationsluftventil
- 58: Luftmassenmesser
- 60: Heißfilmluftmassenmesser
- 62: erster Drucksensor
- 64: zweiter Drucksensor
- 66: Differenzdrucksensor
- 68: Regler

## Patentansprüche

1. Regenerationsluftsystem (50) für ein Abgasnachbehandlungssystem eines Verbrennungsmotors (10), wobei das Regenerationsluftsystem (50) einen Regenerationsluftförderelement (52), einen Regenerationsluftkanal (54) und ein Regenerationsluftventil (56) umfasst, **dadurch gekennzeichnet, dass** in dem Regenerationsluftkanal (54) eine Sensorik (58, 60, 62, 64, 66) zur Ermittlung eines Regenerationsluftmassenstroms *ṁ*_{SL} angeordnet ist.

2. Regenerationsluftsystem (50) nach Anspruch 1, **dadurch gekennzeichnet, dass** die Sensorik (58, 60) zur Ermittlung des Regenerationsluftmassenstroms *ṁ*_{SL} ein Luftmassenmesser (58), insbesondere ein Heißfilmluftmassenmesser (60), umfasst.

3. Regenerationsluftsystem (50) nach Anspruch 1, **dadurch gekennzeichnet, dass** die Sensorik (62, 64, 66) mindestens einen Drucksensor (62, 64, 66), insbesondere einen Differenzdrucksensor (66) zur Ermittlung einer Druckdifferenz über das Regenerationsluftförderelement (52) umfasst.

4. Regenerationsluftsystem (50) nach einem der Ansprüche 1 bis 3, **dadurch gekennzeichnet, dass** das Regenerationsluftsystem (50) einen Regler (68) umfasst, welcher mittels der Sensorik (58, 60, 62, 64, 66) die Fördermenge des Regenerationsluftförderelements (52) regelt.

5. Abgasnachbehandlungssystem für einen Verbrennungsmotor (10), mit einer Abgasanlage (20), welche mit einem Auslass (18) eines Verbrennungsmotors (10) verbindbar ist, wobei die Abgasanlage (20) einen Abgaskanal (22) aufweist, in welchem in Strömungsrichtung eines Abgases des Verbrennungsmotors (10) durch den Abgaskanal (22) ein motornaher Drei-Wege-Katalysator (28) und stromabwärts des motornahen Drei-Wege-Katalysators (28) ein Partikelfilter (30) mit einer katalytisch wirksamen Beschichtung (32) angeordnet ist, **dadurch gekennzeichnet, dass** das Abgasnachbehandlungssystem ein Regenerationsluftsystem (50) nach einem der Ansprüche 1 bis 4 aufweist, wobei an dem Abgaskanal (22) stromabwärts des motornahen Drei-Wege-Katalysators (28) und stromaufwärts des Partikelfilters (30) eine Einleitstelle (48) für die Regenerationsluft des Regenerationsluftsystems (50) ausgebildet ist.

6. Abgasnachbehandlungssystem nach Anspruch 5, **dadurch gekennzeichnet, dass** im Abgaskanal (22) stromabwärts eines Auslasses (18) des Verbrennungsmotors (10) und stromaufwärts des motornahen Drei-Wege-Katalysators (28) eine Turbine (26) eines Abgasturboladers (24) angeordnet ist.

7. Abgasnachbehandlungssystem nach Anspruch 5 oder 6, **dadurch gekennzeichnet, dass** im Abgaskanal (22) stromaufwärts des motornahen Drei-Wege-Katalysators (28) eine erste Lambdasonde (34) und stromabwärts der Einleitstelle (48) für die Regenerationsluft und stromaufwärts des Partikelfilters (30) mit der katalytisch wirksamen Beschichtung (32) eine zweite Lambdasonde (36) angeordnet sind.

8. Abgasnachbehandlungssystem nach einem der Ansprüche 5 bis 7, **dadurch gekennzeichnet, dass** in der Abgasanlage (20) ein Differenzdrucksensor (38) vorgesehen ist, mit welchem eine Druckdifferenz über den Partikelfilter (30) mit der katalytisch wirksamen Beschichtung (32) messbar ist.

9. Verfahren zur Abgasnachbehandlung eines Verbrennungsmotors (10) mit einer Abgasanlage (20), welche mit einem Auslass (18) eines Verbrennungsmotors (10) verbindbar ist, wobei die Abgasanlage (20) einen Abgaskanal (22) aufweist, in welchem in Strömungsrichtung eines Abgases des Verbrennungsmotors (10) durch den Abgaskanal (22) ein motornaher Drei-Wege-Katalysator (28) und stromabwärts des motornahen Drei-Wege-Katalysators (28) ein Partikelfilter (30) mit einer katalytisch wirksamen Beschichtung (32) angeordnet ist, sowie mit einem Regenerationsluftsystem nach einem der Ansprüche 1 bis 4, wobei an dem Abgaskanal (22) stromabwärts des motornahen Drei-Wege-Katalysators (28) und stromaufwärts des Partikelfilters (30) eine Einleitstelle (48) für die Regenerationsluft des Regenerationsluftsystems (50) ausgebildet ist, umfassend folgende Schritte:
- Ermitteln einer Abgastemperatur (T_{EG}) oder einer Bauteiltemperatur (T_{OPF}) des Partikelfilters (30) mit der katalytisch wirksamen Beschichtung (32),
- Aufheizen des Partikelfilters (30), wenn die ermittelte Abgastemperatur (T_{EG}) oder die Bauteiltemperatur (T_{OPF)} des Partikelfilters (30) unterhalb einer zur Regeneration des Partikelfilters (30) notwenigen Regenerationstemperatur (T_{reg}) liegt, wobei
- der Verbrennungsmotor (10) mit einem unterstöchiometrischen Verbrennungsluftverhältnis (λ < 1) betrieben wird, und wobei
- durch das Regenerationsluftsystem Frischluft in den Abgaskanal (22) eingeblasen wird, mit welcher die unverbrannten Abgaskomponenten auf der katalytisch wirksamen Beschichtung (32) des Partikelfilters (30) exotherm umgesetzt werden, wobei
- die Zumessung und Regelung des Regenerationsluftmassenstroms *ṁ*_{SL} derart erfolgt, dass sich stromabwärts einer Einleitstelle (48) des Regenerationsluftsystems (50) in den Abgaskanal (22) ein stöchiometrisches oder überstöchiometrisches Abgas einstellt.

10. Verfahren zur Abgasnachbehandlung eines Verbrennungsmotors (10) nach Anspruch 9, **dadurch gekennzeichnet, dass** ein Istmassenstrom ermittelt wird und mit einem Sollmassenstrom verglichen wird, wobei das Regenerationsluftförderelement (52) bei einer Abweichung des Istmassenstroms vom Sollmassenstrom entsprechend durch einen Regler (68) geregelt wird.

11. Verfahren zur Abgasnachbehandlung eines Verbrennungsmotors (10) nach Anspruch 9 oder 10, **dadurch gekennzeichnet, dass** die Abgastemperatur (T_{EG}) des Verbrennungsmotors (10) ermittelt wird und mit einer Schwellentemperatur (T_{S}) verglichen wird, wobei innermotorische Heizmaßnahmen eingeleitet werden, wenn die Abgastemperatur (T_{EG}) unterhalb der Schwellentemperatur (T_{S}) liegt.

12. Verfahren zur Abgasnachbehandlung des Verbrennungsmotors (10) nach Anspruch 9 bis 11, **dadurch gekennzeichnet, dass** das Regenerationsluftsystem (50) einen Luftmassenmesser (58, 60) aufweist, wobei aus einer Änderung des Stroms oder des Widerstandes des Luftmassenmessers (58, 60) auf der Regenerationsluftmassenstrom *ṁ*_{SL} geschlossen wird.

13. Verfahren nach einem der Ansprüche 9 bis 12, **dadurch gekennzeichnet, dass** eine Druckdifferenz Δp über das Regenerationsluftförderelement (52) ermittelt wird, wobei der Regenerationsluftmassenstrom *ṁ*_{SL} aus der Druckdifferenz Δp und der Drehzahl n_{SL} des Regenerationsluftförderelements (52) berechnet wird.

14. Verfahren nach einem der Ansprüche 9 bis 13, **dadurch gekennzeichnet, dass** ein Verbrennungsluftverhältnis (λ₁) an der ersten Lambdasonde (34) ermittelt wird, und der Regenerationsluftmassenstrom *ṁ*_{SL} derart geregelt wird, dass sich stromabwärts der Einleitstelle (48) ein stöchiometrisches Abgas ergibt.

15. Verfahren nach einem der Ansprüche 9 bis 14, **dadurch gekennzeichnet, dass** stromaufwärts und/oder stromabwärts des Partikelfilters (30) eine Abgastemperatur (T_{EG}) ermittelt wird, wobei der Regenerationsluftmassenstrom *ṁ*_{SL} derart geregelt wird, dass eine thermische Schädigung des Partikelfilters (30) vermieden wird und/oder ein Absinken der Temperatur (T_{OPF}) des Partikelfilters (30) unter seine Regenrationstemperatur (T_{reg}) vermieden wird.
